# EUROPEAN PATENT APPLICATION

(11) **EP 4 215 044 A1**
(43) Date of publication of application: **26.07.2023**
(21) Application number: 23153049.4
(22) Date of filing: 24.01.2023
(51) Int. Cl.: A01M 1/20

(54) **INSECT BAIT TRAP**

(30) Priority: 24.01.2022 ES 202230100 U
(71) Applicant: ZENIT Estudio de Diseño e Innovación S.L., 46010 Valencia (ES)
(72) Inventor: Blasco Feo, Vicente, Valencia (ES)
(74) Representative: Soler Lerma, Santiago

(57) **Abstract**

The invention relates to an insect bait trap with an outer container and a bait inside, said trap comprising a base (2) and a cover (1) which when joined generate an inner cavity suitable for housing the bait, said container having a plurality of holes that communicate the interior with the exterior of the trap allowing the exit of volatile substances attractive to insects. The cover (1) comprises a cover skirt (3), a waist (4) and a turret (5) with windows (6) and, the base (2) comprises a base skirt (10) and a bowl (13) suitable for containing the bait. The base (2) and the cover (1) have means to be fixed to each other.

## Description

The invention, as its name indicates, relates to an insect trap comprising a bait.

The trap is of the type comprising an outer container and a bait inside it, there being communication between the interior and the exterior of the container so that the insect can enter the container attracted by the bait, eat from it and leave later to, as in the case of ants, share it in the anthill thereby multiplying its effect.

The characteristic of the proposed trap is that the container allows the perfect installation of the bait, the aeration thereof allowing the dispersion of the effluvia that attract the insects, the easy access of the insects to the bait and their later exit all together with its high resistance, reliability, safety and ease of use.

The technical field to which it belongs is that of insect bait traps.

### BACKGROUND OF THE INVENTION

Insect traps are well known which comprise a container with a bait inside it wherein that container has openings communicating its interior and exterior, these windows being suitable to propagate the attractive odour of the bait and, in turn, to allow the entry and exit of insects.

A sample of this type of baits are, for example, patent EP13192393 of the same applicant or Spanish patent ES2619115 also of the applicant.

The two patents cited as an example of the state of the art mention the physical device wherein the bait is located.

An example of a trap with an attractant and a toxic insecticidal substance is found in patent US1700517 wherein another box, closed during transport, is located in a central position inside a container box and which contains an element attractive to insects such as food or bread.

One of the problems presented by bait traps is that relating to the difficulty for the attractive odour to be adequately dispersed without having to resort to the dilution of the bait with the problems that this generates to keep it in its bowl especially during its transport.

A solution to this problem has been found in utility model U201000932 where a liquid bait is located inside a capsule and, upon putting the device into use this capsule is mechanically broken by the pressure of a mechanism. This system does not prevent that, once in use, the bait may come out of the trap if it changes position, with the risks that this entails for children or animals.

### DESCRIPTION OF THE INVENTION

The invention that is proposed aims to resolve the problems indicated by obtaining a trap that presents a great diffusion of volatiles but, at the same time, a high effectiveness and a high safety that prevents involuntary contact with the toxic substance of the bait either by opening the trap, by its improper handling or by breaking.

For this purpose, a trap is proposed comprising a bait inside a container, this container having a plurality of holes, which communicate its interior with its exterior allowing the exit of volatile insect attractants and the entry and exit of insects. These windows are covered during storage and transport and can be opened by the user when putting the device into use.

The device comprises:
- A cover that is divided into two clearly differentiated areas; a skirt, which we will call the cover skirt, and a turret.
- A base that is divided into two distinct areas; a skirt, which we will call the base skirt and a bowl suitable for housing the bait.

The cover features a truncated pyramid-shaped base that rises to a waist that gives way to a turret that rises. This turret, which culminates the assembly, is preferably cylindrical in shape and is internally communicated with the base.

This pyramidal shape distributes the vertical forces that can be applied on the device making it resistant. Radially disposed inner ribs on the inner face of the cover skirt further reinforce this device.

The base and the cover have suitable means for fixing one to the other.

In a possible embodiment, the cover skirt has joining means that are complementary to other joining means arranged on the base skirt.

In a possible embodiment, these joining means comprise projections of half upward arrow section arranged on the base skirt and eyelets on the cover skirt, vertically coincident with the projections of half arrow section. The eyelets and the projections have complementary geometry in such a way that once the projections are inserted into the eyelets, the cover and the base are joined in a non-removable way.

In another possible embodiment the joining means comprise, on the cover skirt and on the base skirt, a coincident flange, preferably perimeter, suitable for performing a sealing, heat-sealing, gluing or any other form of joining that, in addition to guaranteeing the union between the base and the cover, guarantees the tightness of the assembly.

We will call a coincident flange the one that, with the base and cover overlapped and in a position of maximum proximity, the base flange comes into contact with that of the cover.

The turret, preferably cylindrical in shape, culminates the cover and has a series of windows that during transport remain sealed, for which each of them has a sealing sheet that closes it.

To put the device into use, the user can open one or more of those windows by breaking the corresponding sealing sheet for which each of them has a break lever.

The windows face each other thereby facilitating the passage of air streams and are located in the turret at its bottom which abuts the top of the roof skirt, thereby allowing the insects to climb up the skirt and access the sales and through them to the inside of the device and the bait.

The base comprises the base skirt and the bait bowl.

The base skirt supports, in a possible embodiment, the projections of half upward arrow section and ribs that give robustness.

The bowl is centrally located and arranged on the vertical of the turret. The perimeter walls of the bowl rise to the waist of the device.

The bowl has thick perimeter walls that form a perimeter passage at its top with a flange that acts as a gasket and adjusts to the inside of the waist sealing the bait during transport and storage operations preventing it from losing properties.

Once the device in use, with one or some of its windows open, the insects can enter the trap by directly accessing that perimeter passage of the bowl, wherethrough they can wander and have easy access to the bait.

To improve access to the bait and also contribute to retaining the bait in the bowl, it has radial partitions wherethrough the insects can run.

A trap as described is simple, safe, robust, efficient and has great ease of assembly. Once the bait has been placed in the bowl, it is only necessary to superimpose the base and the cover by inserting the projections into the eyelets until they are fixed by geometry.

For a better understanding of the invention, the following figures are given.

### BRIEF DESCRIPTION OF THE FIGURES

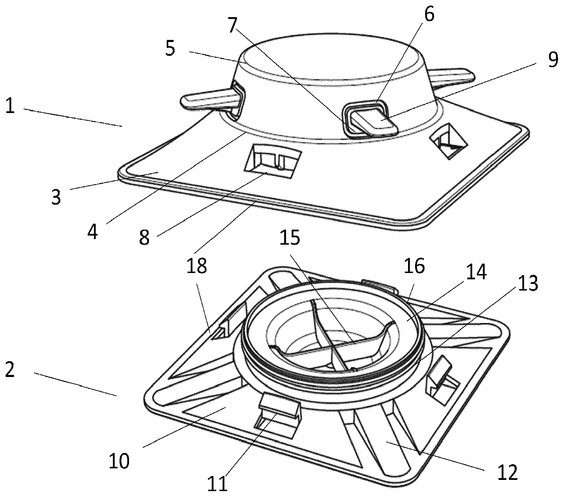

FIGURE 1 shows the device in explosion, with the exception of the bait, and thus the cover (1) and the base (2) can be seen.

In the cover (1), the cover skirt (3), the eyelets (8), the waist (4), the turret (5), the windows (6), the sealing sheets (7) and the break levers (9) are observed.

In the base (2) one can observe the base skirt (10), the projections (11) of half arrow section, the ribs of the base (12), the bowl (13), the perimeter passage (14) of the bowl and the radial partitions (15) and a flange (16) that acts as a gasket and adjusts to the inside of the waist sealing the bait during transport and storage operations avoiding losing properties.

Both in the base and in the cover there is a matching flange (18) suitable for, in a possible embodiment, allowing the joining between base and cover by sealing, adhesive, heat sealing or any other system.

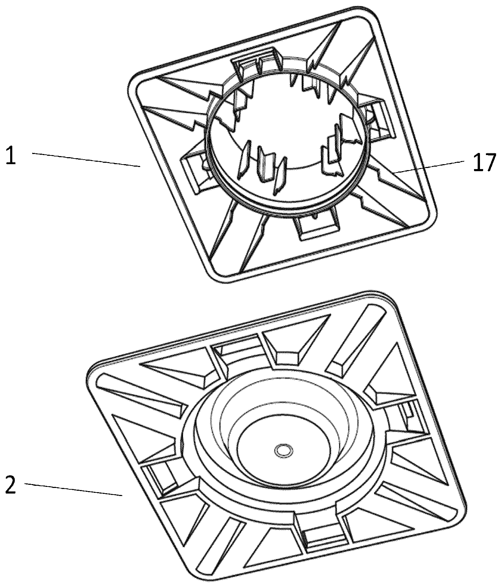

FIGURE 2 shows in explosion the device, this time from a bottom perspective, wherein the cover (1) and the base (2) can be seen, the ribs of the cover (17) now being observed.

### DESCRIPTION OF AN EMBODIMENT OF THE INVENTION

An embodiment of the invention is explained here that is not unique or limiting.

The insect trap comprises a cover (1) and a base (2) which, together generate an internal cavity suitable for housing a bait and, when put into use, that bait is made accessible to insects thanks to practicable accesses that communicate the interior and exterior of the trap.

To this end, the cover (1) comprises the cover skirt (3), the eyelets (8), the waist (4), the turret (5), the windows (6), the sealing sheets (7) and the break levers (9).

For its part, the base (2) comprises the base skirt (10), the projections (11) of half arrow section, the ribs of the base (12), the bowl (13), the perimeter passage (14) of the bowl and the radial partitions (15) and a flange (16) that acts as a gasket and adjusts to the inside of the waist sealing the bait during transport and storage operations preventing it from losing properties.

The cover skirt (3) overcomes, by way of a ramp, the distance between the floor and the windows (6) allowing the insects to access them. On the other hand, the pyramid base structure helps to distribute the forces that can be exerted vertically on the device, which thus gains in robustness, even more so by incorporating the ribs of the cover (17).

The cover skirt (3) reaches up to the waist (4) wherefrom the turret (5) starts with the windows (6).

This waist (4), on the inside, adjusts to the flange (16), thus preserving the bait during transport and storage operations.

The windows each comprise a sealing sheet (7) and a break lever (9). The break levers are attached to those sealing sheets such that exerting pressure on the break levers causes tearing of the sealing sheets, leaving the affected window open. In this way, the user can decide how many and which of the windows to open.

The base (2) comprises a base skirt (10) also in the form of a pyramid base wherein the ribs of the base (12) are located thereby contributing to strengthening the structure of the device.

Also in the base skirt (10) are the projections (11) of half arrow section arranged in the vertical of the eyelets (8) of which they are complementary in such a way that when the projections (11) are inserted into the eyelets (8) the base (2) and the cover (1) are fixed since the geometry of the projections (11) fixes them to the eyelets, when abutting and preventing the recoil.

The base supports the bowl (13) wherein the bait is disposed. This bowl comprises a perimeter wall whose upper part generates a perimeter passage (14), radial partitions (15) and a flange (16) that acts as a gasket and adjusts to the inside of the waist sealing the bait during transport and storage operations preventing it from losing properties.

Both the perimeter passage and the upper part of the radial partitions favour insects' access to the bait, being able to move through them.

The device, once mounted, does not allow its disassembly and this by the action of the projections (11) whose geometry, once inserted into the eyelets (8) makes it impossible to retract.

The trap thus configured favours the access of the insects to the bait for several reasons.

First, the sealing of the bait space during transport allows the use of more volatile baits which results in a greater dispersion of the effluent and a greater attraction of the insects.

On the other hand, the cover skirt (3) in addition to strengthening the device by distributing the loads, acts as a ramp allowing the insects to reach the windows that, once opened, allow access to the bait.

For the best access of the insects to the bait, a series of walkways have been arranged such as the perimeter passage (14) of the bowl and the radial partitions (15).

## Claims

1. **INSECT BAIT TRAP** comprising a base (2), a cover (1) which together generate an inner cavity suitable for housing a bait and which has practicable accesses communicating the interior and exterior of the trap **characterised in that** the cover (1) comprises a cover skirt (3), a waist (4) and a turret (5) with windows (6) and the base (2) comprises a base skirt (10) and a bowl (13) suitable for containing the bait. The base (2) and the cover (3) have suitable means to be fixed to each other.

2. **INSECT BAIT TRAP** according to claim 1, **characterised in that** the cover skirt (3) rises up to the windows (6).

3. **INSECT BAIT TRAP** according to claim 1, **characterised in that** each window comprises a sealing sheet (7) and a break lever (9).

4. **INSECT BAIT TRAP** according to claim 1, **characterised in that** the bowl (3) comprises a perimeter wall with a perimeter passage (14) in its upper part.

5. **INSECT BAIT TRAP** according to claim 1, **characterised in that** the bowl (3) comprises a flange (16) arranged on the perimeter wall suitable to adjust to the inner part of the waist (4).

6. **INSECT BAIT TRAP** according to claim 1, **characterised in that** the bowl comprises radial partitions (15).

7. **INSECT BAIT TRAP** according to claim 1, **characterised in that** the attachment means comprise projections (11) on the base and eyelets (8) on the cover, these eyelets being suitable for housing the projections (11) and fixing them.

8. **INSECT BAIT TRAP** according to claim 1, **characterised in that** the joining means comprise a coincident area in the base and cover.

9. **INSECT BAIT TRAP** according to claim 8 **characterised in that** said coincident area is a flange (18).

10. **INSECT BAIT TRAP** according to claim 1, **characterised in that** the cover skirt (3) comprises ribs at its bottom.
